# EUROPEAN PATENT SPECIFICATION

(11) **EP 2 804 004 B1**
(45) Date of publication and mention of the grant of the patent: **03.02.2016**
(21) Application number: 14167649.4
(22) Date of filing: 09.05.2014
(51) Int. Cl.: G01N 35/10, B01L 3/02, G01N 1/38

(54) **ELECTRONIC PIPETTE**
ELEKTRONISCHE PIPETTE
PIPETTE ÉLECTRONIQUE

(30) Priority: 13.05.2013 FI 20135495
(43) Date of publication of application: 19.11.2014
(73) Proprietor: Thermo Fisher Scientific Oy, 01620 Vantaa (FI)
(72) Inventor: Berghäll, Suvi M., FI-02720 Espoo (FI); Telimaa, Juha, FI-04430 Järvenpää (FI); Lind, Mikael, FI-00840 Helsinki (FI)
(74) Representative: Berggren Oy Ab

(56) References cited:
- US-A1- 2005 118 069
- US-A1- 2009 074 622
- Anonymous: "E4 XLS Electronic Pipettes - Advanced Electronic Pipette with RFID", Operating Instructions, 27 June 2011 (2011-06-27), pages 1-64, XP055035842, USA Retrieved from the Internet: URL:http://www.pipette.com/GetContent.ashx ?ctn=Manuals/E4XLS_manual_9920-396.pdf [retrieved on 2012-08-20]

## Description

### Field of technology

The present invention relates to an electronic pipette intended for use in the dosage of liquids and comprising a piston actuated in a cylinder by a motor, a control system for carrying out pipette operations, and a user interface for operating the pipette, which user interface comprises a display.

### Technological background

Pipettes used for liquid dosage in laboratories comprise a piston movable in a cylinder for aspiration of liquid into a tip container connected with the cylinder. The volume is usually adjustable. There are also electronic pipettes whose piston is actuated by means of an electric motor and a control system associated with it. However, there are also electronic pipettes whose pistons are actuated by manual force and which comprise an electronic display only. Electronic pipettes have a user interface for selection of the desired pipette function (e.g. direct or reverse pipetting), setting of the volume and for giving commands for performing operations. The user interface has the necessary switches for input of the necessary settings and performance of the functions. The user interface is connected to a display, by means of which the volume and other necessary data can be displayed. The display can also show menus allowing data input in the control system.

Examples of known electronic pipettes are disclosed in publications WO 2005079989 and WO 2005079987, for example.

The pipetting operations carried out with pipettes include direct pipetting, reverse pipetting, repetitive reverse pipetting, stepped pipetting, diluting, and mixing, for example.

In dilution operation generally two different liquids are aspired in predefined amounts into the tip container of a pipette so, that there is a small air gap separating the liquids from each other while the liquids are located in the tip container. After the aspiration the liquids in the tip container are dispensed in the same vessel where, due to the dispensing action, the two liquids get mixed and diluted liquid is obtained with a dilution ratio defined by the aspired amounts of liquids. One of the liquids used in dilution operation is generally water.

The dilution process can take plurality of pipetting phases with different amounts of liquids, and thus the preparation for and carrying out the actual dilution process can be complex and time consuming.

Similar problems affect also other pipetting operations, where the pipetting actions are carried out in plurality of steps.

### Summary of the invention

In order to improve the usability of an electronic pipette especially in those pipetting operations including a plurality of pipetting steps and changes in liquid volumes to be aspired and dispensed, the present invention now provides an electronic pipette where the user interface of the pipette comprises features for defining at least one dilution variable for pipetting operations based on input pipetting operation variables of which one input pipetting operation variable is dilution ratio.

This way only portion of the required dilution information or variables need to be defined and input into the user interface, and based on this information the pipette can define the other required dilution variables for the pipetting operation.

The pipetting operations which gain most of this type of user interface defined variables in addition to dilution pipetting operations is stepped pipetting operations, but this feature is beneficial also to other pipetting operations.

In the present invention the user interface defined variables advantageously comprises two liquid volumes to be aspired based on dilution ratio and total volume.

Alternatively the user interface defined variables may comprise one liquid volume to be aspired based on dilution ratio and at least one other input dilution volume.

Alternatively the user interface defined variables may comprise series of different individually input dilution ratios.

Alternatively the user interface defined variables may comprise series of different dilution ratios based on the first and last dilution ratio and the user interface calculates at least one intermediate ratio based on the given number of series.

Alternatively the user interface defined variables may comprise series of different dilution ratios based on one given dilution ratio, the number of series and at least one dilution ratio step between series.

The electronic pipette according to the invention may include data transfer means for inputting pipetting operation variables. This way more complex and numerous variables to be input can be easily prefabricated, with a computer for example, and input to the user interface. The prefabrication of variables to be input into the user interface by computer can be defined on basis of a graphical curve, presenting for example different dilution ratios in different pipetting phases or steps, or on basis of a table comprising numeric values and variables. The data transfer means may also be included in the electronic pipette itself.

The electronic pipette of the invention is advantageously a handheld entity, which may have a separate charging station, which charging station may also advantageously be used for inputting variables for pipetting operations and other data into the control system and/or user interface of the electronic pipette.

The features of the electronic pipette of the present invention are presented more precisely in the independent claim 1. The dependent claims define further advantageous features and embodiments of the invention.

### Brief description of the figures

Exemplifying embodiments of the invention and its advantages are explained in greater detail below in the sense of an example and with reference to the accompanying drawings, where
figure 1 shows schematically an electronic pipette according to the present invention,
figure 2 shows schematically functional diagram of an electronic pipette according to the present invention,
figures 3A-3D shows an example of the steps for volume based setting of dilution pipetting operation according to the present invention, and
figures 4A-4K shows an example of an alternative way for inputting settings of an electronic pipette according to the present invention.

### Detailed description of the embodiments

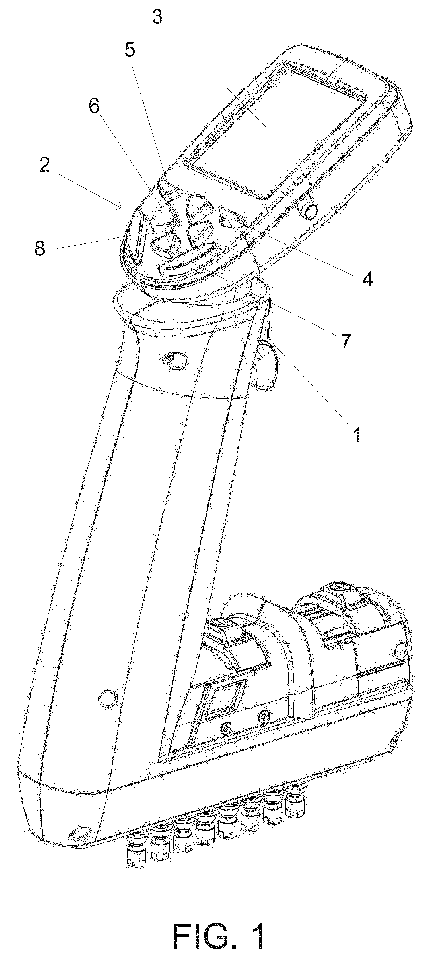

Figure 1 show schematically an electronic pipette according to the present invention, which is driven with an electric motor. The user interface of the control system comprises an operating switch 1, a keyboard 2 and a display 3. The pipette shown in figure 1 is a handheld entity, which in this embodiment is an electronic multichannel pipette.

The display 3 is disposed at the top of the pipette, in a position upwardly oblique away from the keyboard 2 on the upper surface of a projection. A power source is provided within the projection. The keyboard 2 is disposed on the upper surface of the projection at its end on the side of the body. The display shows necessary information relating to the use of the pipette, such as e.g. the pipette volume and function in use and the current function step. The display also shows depending on the situation different menus, in which different actions, settings and applications may be selected or modified.

Navigation and selections on the menu presented in the display is carried out by means of the keyboard 2. The keyboard keys are: a right-hand selection key 4, a left-hand selection key 5, arrow keys 6, right-hand tip removal key 7 and left-hand tip removal key 8. The current is switched on by depressing any key. Depending on the menu displayed, the selection keys allow the user to move forwards or backwards in the menu hierarchy or to start using a selected function or application. Depending on the menu displayed, the arrow keys allow the user to move to an option on the display or to change characters on the display (such as digits or writing). The selection function enables the user to move to the desired location in the menu and to confirm it by means of the selection keys. The characters may act on a setting of the function (e.g. volume, piston stroke speed), selecting function or application, or they may give some information.

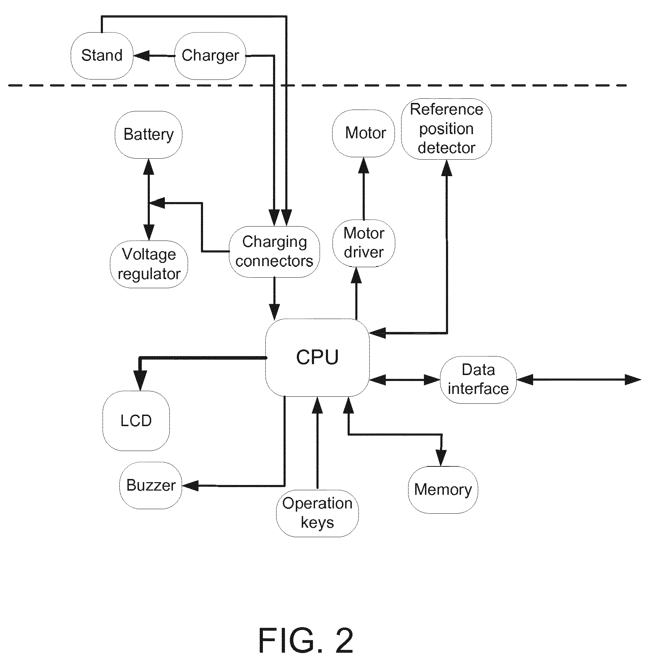

Figure 2 shows a functional diagram of an electronic pipette. The core of the control system is a central processing unit (CPU) connected with a memory. The CPU is used by means of the operation keys, i.e. the operating switch 1 and the setting keyboard 2. The CPU is informed of the piston position by a reference position sensor. The CPU gives the commands needed for actuating the piston to a motor driver, which controls a motor. The functions are indicated on the display (liquid crystal display LCD). Some functions are indicated with acoustic signals by means of a buzzer. In addition, the CPU is connected to a data interface allowing data input into or output from the CPU. A chargeable battery acts as the voltage source. The battery comprises a voltage regulator. In this embodiment the battery is charged through charging connectors using a charger in a stand. The charging is also controlled by the CPU.

In figure 2, the parts under the dash line are included in the handheld entity of the electronic pipette, whereas the parts above the dash line form a separate stand.

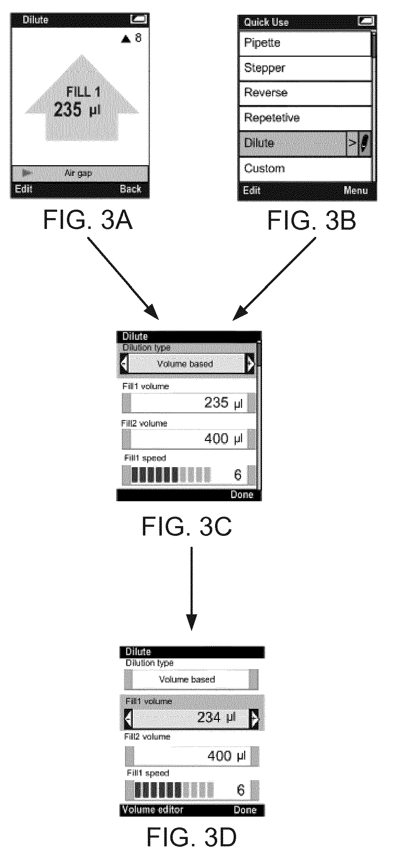

Figures 3A-3D shows an example of the steps for volume based setting of dilution pipetting operation according to the present invention. The changing of the dilution operation in this embodiment can be started in a situation where the electronic pipette is ready to start the dilution pipetting operation from a "Dilute" menu, as shown in figure 3A, or through the settings of a "Quick use" menu by selecting option "Dilute", as shown in figure 3B.

When editing of the dilution pipetting operation is started a "Dilute" editing menu is opened, where "Dilution type" option is either selected or pre-set to "Volume based" as shown in figure 3C.

In figure 3D is shown situation, where option "Fill1 volume" is selected and changed. When the setting of a new variable or value is done, the user interface returns either to the "Dilute" menu shown in figure 3A or to the "Quick use" menu shown in figure 3B, depending from where setting process was started.

From the "Dilute" editing menu it is also possible to change the "Fill2 volume" variable or value. It is to be noted however, that the user interface does not allow the sum of these two fill volumes, "Fill1 volume" and "Fill2 volume", to exceed the maximum volume that can be aspired with the pipette in question. In dilution pipetting operation the user interface also takes into account the volume required by the air gap between the two liquids. This leads to the situation where when the maximum volume of the pipette in question is used for aspiration, increasing the amount of fill volume of one liquid by the user will result to decreasing the amount of fill volume of another liquid by the user interface.

The "Dilute" editing menu, as shown in figures 3C-3D, is also equipped with option "Fill1 speed" which allows setting and changing of the aspiration speed of liquid 1. Similar "Fill2 speed" exists in the menu also for liquid 2.

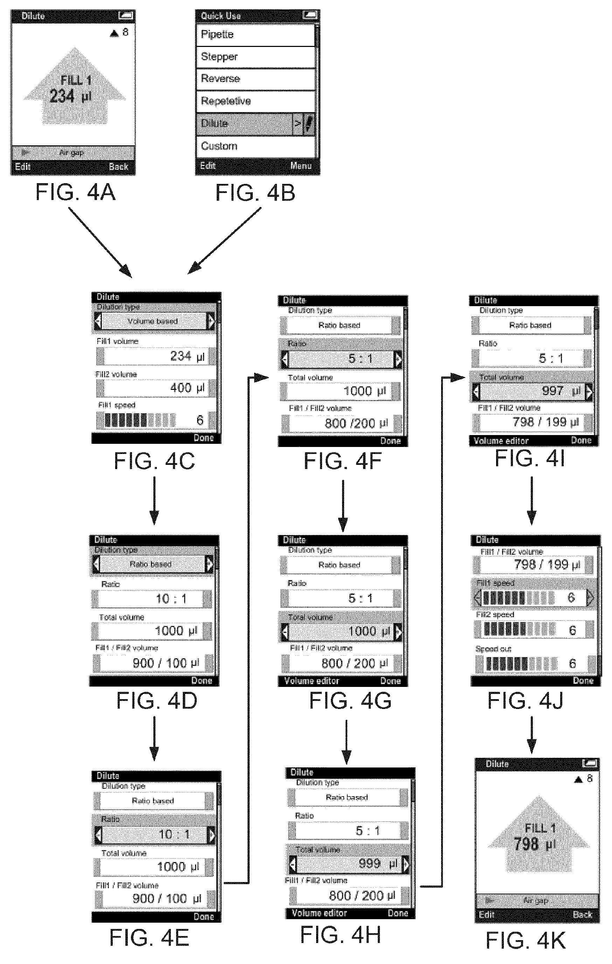

Figures 4A-4K shows an example of an alternative way for inputting settings of an electronic pipette according to the present invention.

Figures 4A-4C corresponds to the figures 3A-3C and the process and actions are the same. In the situation of figure 4C the "Dilute" editing menu's option "Dilution type" is changed from "Volume based" to "Ratio based" as shown in figure 4D. This change also changes the options available in the "Dilute" editing menu as can be seen from figure 4D. Dilution ratio is the ratio of Fill1 volume and Fill2 volume.

Now, when "Ratio" option of this menu is selected and the variable is changed, as shown in figures 4E and 4F, the value of the option "Total volume" remains the same but the variable of option "Fill1 / Fill2 volume" changes accordingly, as can be seen when comparing figures 4E and 4F.

Next, as shown in figures 4G and 4H, the option "Total volume" is selected and its variable is changed from 1000 µl to 999 µl. As can be seen from figure 4H, this change of variable does not affect the variables of option "Fill1 / Fill 2 volume", since the user interface uses general rounding rules (999 / 5 = 199.8 ≈ 200).

However, when the variable of the option "Total volume" in changed further to 997 µl, as is shown in figure 4I, the variable of the option "Fill 1 / Fill 2 volume" changes correspondingly.

Figure 4J shows further option included in this "Dilute" editing menu, which comprise options "Fill1 speed", "Fill2 speed" and "Speed out". These options allow the user to set and change the speeds for aspiration of both liquids and the dispersion speed.

When the changes have been done, the user is returned to the menu from where the editing was started, either to the situation shown in figure 4K which corresponds to the situation of figure 4A with changed Fill1 value, or to the "Quick Use" menu shown in figure 4B.

Similarly the user interface can determinate "Fill2 volume" based on "Dilute ratio" and "Fill1 volume". Accordingly, the user interface can determinate "Fill1 volume" based on "Dilute ratio" and "Fill2 volume".

When preparing serial dilutions (dilutions with different dilution ratios), different dilution ratios are needed. These different dilution ratios can be entered individually. Further, based on the first and last dilution ratio, the user interface can calculate intermediate dilution ratios based on the given number of series. The user interface can also calculate different dilution ratios based on one given dilution ratio, the number of series and dilution ratio steps between series. The series can be linear or nonlinear.

## Claims

1. An electronic pipette comprising
- a piston actuated in a cylinder by a motor,
- a control system for carrying out pipette operations, and
- a user interface for operating the pipette,
**characterized in that** the user interface comprises features for defining at least one dilution variable for pipetting operations based on input pipetting operation variables of which one input pipetting operation variable is dilution ratio.

2. An electronic pipette according to claim 1, wherein the user interface defined variables comprises two liquid volumes to be aspired based on dilution ratio and total volume.

3. An electronic pipette according to claim 1, wherein the user interface defined variables comprises one liquid volume to be aspired based on dilution ratio and at least one other input dilution volume.

4. An electronic pipette according to claim 1, wherein the user interface defined variables comprises series of different individually input dilution ratios.

5. An electronic pipette according to claim 1, wherein the user interface defined variables comprises series of different dilution ratios based on the first and last dilution ratio and the user interface calculates at least one intermediate ratio based on the given number of series.

6. An electronic pipette according to claim 1, wherein the user interface defined variables comprises series of different dilution ratios based on one given dilution ratio, the number of series and at least one dilution ratio step between series.

7. An electronic pipette according to any of claims 1-6, wherein the electronic pipette comprises data transfer means for inputting pipetting operation variables

8. An electronic pipette according to claim 7, wherein the input pipetting operation variables for dilution ratio steps are defined by computer on the basis of a graphic curve or table.

## Patentansprüche

1. Elektronische Pipette, umfassend:
- einen Kolben, der in einem Zylinder durch einen Motor betätigt wird,
- ein Steuersystem, um Pipettenvorgänge durchzuführen, und
- eine Benutzerschnittstelle zum Betätigen der Pipette,
**dadurch gekennzeichnet, dass** die Benutzerschnittstelle Funktionen umfasst, um auf Basis eingegebener Pipettiervorgangsvariablen, wovon eine eingegebene Pipettiervorgangsvariable ein Verdünnungsverhältnis ist, wenigstens eine Verdünnungsvariable für Pipettiervorgänge zu definieren.

2. Elektronische Pipette nach Anspruch 1, wobei die benutzerschnittstellendefinierten Variablen zwei Flüssigkeitsvolumina umfassen, die auf Basis des Verdünnungsverhältnisses und des Gesamtvolumens angestrebt werden sollen.

3. Elektronische Pipette nach Anspruch 1, wobei die benutzerschnittstellendefinierten Variablen ein Flüssigkeitsvolumen umfassen, das auf Basis des Verdünnungsverhältnisses und wenigstens eines anderen eingegebenen Verdünnungsvolumens angestrebt werden soll.

4. Elektronische Pipette nach Anspruch 1, wobei die benutzerschnittstellendefinierten Variablen eine Reihe von unterschiedlichen, einzeln eingegebenen Verdünnungsverhältnissen umfassen.

5. Elektronische Pipette nach Anspruch 1, wobei die benutzerschnittstellendefinierten Variablen Reihen von unterschiedlichen Verdünnungsverhältnissen auf Basis des ersten und des letzten Verdünnungsverhältnisses umfassen, und die Benutzerschnittstelle auf Basis der gegebenen Anzahl von Reihen wenigstens ein Zwischenverhältnis berechnet.

6. Elektronische Pipette nach Anspruch 1, wobei die benutzerschnittstellendefinierten Variablen Reihen von unterschiedlichen Verdünnungsverhältnissen auf Basis eines gegebenen Verdünnungsverhältnisses, der Anzahl von Reihen und wenigstens eines Verdünnungsverhältnisschritts zwischen den Reihen umfassen.

7. Elektronische Pipette nach einem der Ansprüche 1 bis 6, wobei die elektronische Pipette Datenübertragungsmittel zum Eingeben von Pipettiervorgangsvariablen umfasst.

8. Elektronische Pipette nach Anspruch 7, wobei die eingegebenen Pipettiervorgangsvariablen für Verdünnungsverhältnisschritte durch einen Computer auf Basis einer graphischen Darstellung oder einer Tabelle definiert sind.

## Revendications

1. Pipette électronique comprenant
- un piston actionné dans un cylindre par un moteur,
- un système de commande pour effectuer les opérations de la pipette, et
- une interface d'utilisateur pour faire fonctionner la pipette,
**caractérisée en ce que** l'interface d'utilisateur comprend des fonctions pour définir au moins une variable de dilution pour des opérations de pipetage basées sur les variables de fonctionnement de pipetage d'entrée dont une opération de pipetage d'entrée est le rapport de dilution.

2. Pipette électronique selon la revendication 1, dans laquelle les variables définies par l'interface d'utilisateur comprennent deux volumes de liquide à aspirer basés sur le rapport de dilution et le volume total.

3. Pipette électronique selon la revendication 1, dans laquelle les variables définies par l'interface de l'utilisateur comprennent un volume de liquide à aspirer basé sur le rapport de dilution et au moins un autre volume de dilution d'entrée.

4. Pipette électronique selon la revendication 1, dans laquelle les variables définies par l'interface d'utilisateur comprennent une série de différents rapports de dilution entrés individuellement.

5. Pipette électronique selon la revendication 1, dans laquelle les variables définies par l'interface d'utilisateur comprennent des séries de différents rapports de dilution basés sur le premier et le dernier rapport de dilution et l'interface d'utilisateur calcule au moins un rapport intermédiaire basé sur le nombre donné de séries.

6. Pipette électronique selon la revendication 1, dans laquelle les variables définies par l'interface d'utilisateur comprennent des séries de différents rapports de dilution basés sur un rapport de dilution donné, le nombre de séries et au moins une étape de rapport de dilution entre les séries.

7. Pipette électronique selon l'une quelconque des revendications 1-6, dans laquelle la pipette électronique comprend un moyen de transfert de données pour entrer les variables de fonctionnement de la pipette.

8. Pipette électronique selon la revendication 7, dans laquelle les variables de fonctionnement de pipette d'entrée pour les étapes de rapport de dilution sont définies par un ordinateur sur la base d'une courbe graphique ou d'un tableau.
